# EUROPÄISCHE PATENTSCHRIFT

(11) **EP 0 795 921 B1**
(45) Veröffentlichungstag und Bekanntmachung des Hinweises auf die Patenterteilung: **20.06.2001**
(21) Anmeldenummer: 97102362.7
(22) Anmeldetag: 13.02.1997
(51) Int. Cl.: H01Q 1/24, H04B 1/38

(54) **Funksprechgerät**
Radio telephone
Radio téléphone

(30) Priorität: 12.03.1996 DE 29604593 U
(43) Veröffentlichungstag der Anmeldung: 17.09.1997
(73) Patentinhaber: SIEMENS AKTIENGESELLSCHAFT, 80333 München (DE)
(72) Erfinder: Scholz, Ralf, Dr., 82110 Germering (DE); Dafcik, Juan, 85375 Neufahrn (DE)

(56) Entgegenhaltungen:
- EP-A- 0 348 187
- EP-A- 0 459 571
- EP-A- 0 617 520
- EP-A- 0 764 997
- DE-A- 4 328 061
- US-A- 5 278 570

## Beschreibung

Die Erfindung bezieht sich auf ein Funksprechgerät mit einem Sender/Empfänger und einer zugehörigen Geräteantenne.

Die meisten Funksprechgeräte verfügen über eine Anschlußmöglichkeit für eine externe Antenne. Diese kommt jedoch nur bei einem Teil der Kunden zur Anwendung, nämlich beim Einbau des Funksprechgeräts im Auto. Die externe Antennen-Anschlußmöglichkeit befindet sich meistens auf der Geräteunterseite. Eine andere Variante besteht darin, die externe Antenne an dem vorhandenen Antennenanschluß anzuschließen, indem man die Geräteantenne entnimmt. Diese Möglichkeit ist jedoch nicht sehr handhabungsfreundlich wegen der Unterbringung der entnommenen Antenne.

Bei einem Funksprechgerät besteht häufig auch der Wunsch, einen Meßpunkt oder Prüfpunkt für elektrische Messungen anzubieten, um die tatsächlichen kundenrelevanten Merkmale wie Leistung vor der Antenne und Empfindlichkeit ab der Antenne messen zu können.

Aus US 5 278 570 A ist ein Funksprechgerät mit einem Antennenanschlußelement bekannt. Hierbei bildet der elastische Kontakt mit dem Mittelleiter des ersten koaxialen Antennenanschlußelementes bzw. mit dem Mittelleiter des zweiten koaxialen Antennenanschlusses die Kontaktanschlüsse eines Brückenelementes. Durch Betätigen des Umschalters wird wahlweise auf die interne Antenne oder eine ansteckbare externe Antenne umgeschaltet. Aus EP 0 348 187 A ist ganz allgemein ein Handfunktelefon, das zwei Antennen aufweist, bekannt, wobei nach Empfangsverhältnissen automatisch eine der beiden ausgewählt wird. Aus EP 0 764 997 A ist eine Antennenanordnung bekannt, die insbesondere zu Testzwecken eines Funkgerätes vorgesehen ist. Dazu ist ein Brückenclip vorgesehen, um die Antenne und eine Zuleitung miteinander zu verbinden. DE 43 28 061 A offenbart einen Adapter für ein Funkgerät, der einen Ausgang für eine Mobilfunkantenne sowie eine Antennenbuchse aufweist, an die eine externe Antenne anschließbar ist. Aus diesen Dokumenten ist es nicht bekannt, daß eine auf einer Leiterplatte angeordnete Leiterbahn eine durch Kontaktanschlüsse begrenzte Unterbrechung aufweist, wobei die Kontaktanschlüsse zum wahlweisen Anschluß einer HF-Baugruppe an eine zugehörige Geräteantenne oder eine externe Geräteantenne genutzt werden.

Der Erfindung liegt die Aufgabe zugrunde, ein Funksprechgerät anzugeben, das auf einfache Weise mit einer zugehörigen Geräteantenne oder einer externen Antenne betreibbar ist.

Diese Aufgabe wird durch die Merkmale des Anspruches 1 gelöst,

Vorteilhafte Ausgestaltungen und Weiterbildungen des Funksprechgerätes sind in den Unteransprüchen angegeben.

Nachstehend wird die Erfindung anhand eines in der Zeichnung dargestellten Ausführungsbeispiels näher erläutert. Dabei zeigt
- Fig. 1: ein Funksprechgerät in einer Teildarstellung mit dem Bereich für den Antennenanschluß, und
- Fig. 2: den Antennenanschluß und das Brückenelement in einer Detaildarstellung.

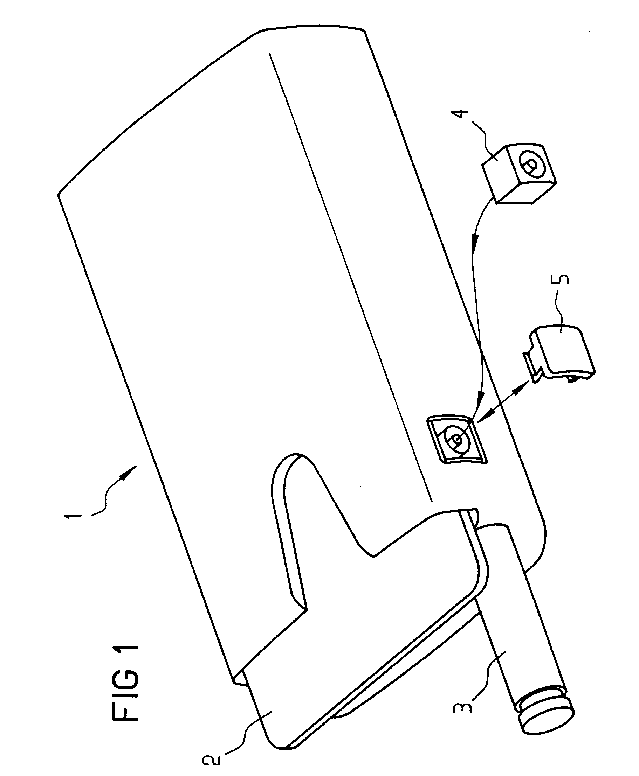

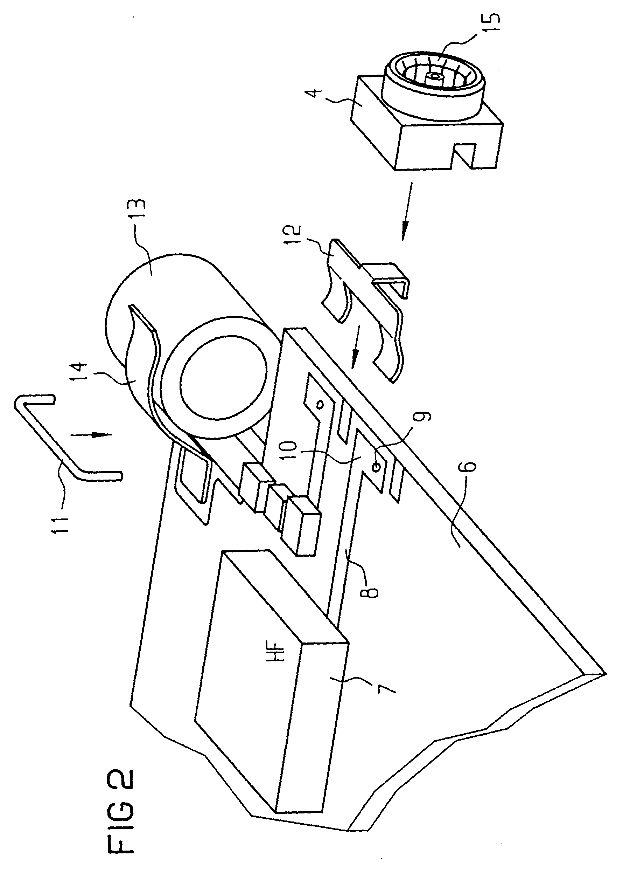

Das in Fig. 1 gezeigte Funksprechgerät 1 ist mit einer Antenne 3 versehen, die parallel zur Gehäuseschmalseite in das Gerät einsetzbar ist. In eine Ausnehmung an der Gehäuserückseite ist eine Karte 2, beispielsweise eine Chipkarte eingeschoben. Im oberen Bereich der Gehäuseschmalseite ist in Antennennähe eine durch eine Abdeckung 5 abschließbare Öffnung vorgesehen, durch die ein Antennenanschlußelement 4 einsteckbar ist. Einzelheiten der Kontaktierung des Antennenanschlußelementes sind in Fig. 2 dargestellt.

Die Teildarstellung gemäß Fig. 2 zeigt eine Leiterplatte 6, die innerhalb des - in der Figur nicht dargestellten - Gerätegehäuses angeordnet ist und Schaltkreise sowie Bauelemente des Funksprechgerätes trägt. Eine auf der Leiterplatte 6 angeordnete HF-Baugruppe 7 ist über eine Leiterbahn 8 mit einem Antennenanschluß 13 verbunden, der zylinderförmig ausgebildet ist zur Aufnahme der Antenne und mittels eines Kontaktfederelementes 14 mit der Leiterbahn für die Antennenzuleitung verbunden ist. Die Leiterbahn 8 für die Antennenzuleitung weist eine Unterbrechung auf mit Kontaktierungsflächen 10 und jeweils einer Bohrung 9 im Endbereich. Mittels eines Brückenelementes, das beispielsweise aus einem Bügel 11 besteht, der mit seinen Enden in die Bohrungen 9 im Endbereich der Leitungsunterbrechung eingesetzt und gegebenenfalls gelötet ist oder eines Federbügels 12, der auf die Leiterplatte aufgesetzt wird und mit seinen Federenden auf den Kontaktflächen 10 im Unterbrechungsbereich der Leiterbahn 8 aufliegen, wird die Unterbrechung der Antennenzuleitung geschlossen. Nach Entfernen der Brücke 11 bzw. 12 auf der Leiterplatte 6 innerhalb des Gerätes kann das Antennenanschlußelement 4 angeschlossen werden. Das Antennenanschlußelement 4 ist als Steckadapter ausgebildet, der aus einem Grundkörper besteht mit einem HF-Stecker 15 an der Oberseite und Kontaktelementen zur Kontaktierung mit den Kontaktflächen 10 der Leiterbahn 8 beim Aufstecken des Steckadapters auf die Leiterplatte 6.

Auf diese Weise wird erreicht, daß man einen Meßpunkt oder Prüfpunkt für elektrische Messungen erhält, um die tatsächlichen kundenrelevanten Merkmale, wie Leistung vor der Antenne und Empfindlichkeit ab der Antenne messen zu können. Diese Funktionalität wird durch das vorstehend beschriebene Entfernen einer Brücke auf der Leiterplatte innerhalb des Gerätes und das Einstecken eines Antennenanschlußelementes erreicht. Die Brücke kann gleichzeitig durch die korrekte Auslegung des Wellenwiderstandes das erste Element einer Anpaßschaltung darstellen, wodurch man ggf. ein diskretes Bauteil der Anpassung sparen kann. Die Montage des Steckadapters oder Anschlußelementes kann von der Geräteaußenseite her (vgl. Fig. 1) oder durch eine Gerätedemontage realisiert werden. Die Montage von der Geräteaußenseite aus erfolgt in der Weise, daß die beispielsweise aus Kunststoff bestehende Abdeckung 5 abgenommen und der Steckadapter eingesteckt wird.

## Patentansprüche

1. Funksprechgerät mit
- einem Sender/Empfänger,
- einer zugehörigen Geräteantenne,
- einer HF-Baugruppe (7),
- einer auf einer Leiterplatte (6) angeordneten Leiterbahn (8) zur elektrisch leitenden Verbindung der HF-Baugruppe (7) mit der zugehörigen Geräteantenne (3),
- wobei die Leiterbahn eine durch zwei Kontaktanschlüsse (10,9) begrenzte Unterbrechung aufweist zum wahlweisen Aufstecken eines elektrisch leitenden Brückenelementes (11,12) zum Anschluß der HF-Baugruppe (7) an die zugehörige Geräteantenne (3) oder eines Antennenanschlußelementes (4) zum Anschluß der HF-Baugruppe (7) an eine externe Antenne.

2. Funksprechgerät nach Anspruch 1, dadurch **gekennzeichnet,** daß das Antennenanschlußelement (4) als Steckadapter mit einem Koaxialanschluß ausgebildet ist.

3. Funksprechgerät nach Anspruch 1 oder 2, dadurch **gekennzeichnet,** daß das Brückenelement (12) als Federelement ausgebildet ist und über Federn auf Leiterbahnen (8) einer Leiterplatte (6) kontaktiert ist.

4. Funksprechgerät nach Anspruch 3, dadurch **gekennzeichnet,** daß das Brückenelement (11) aus einem Bügel besteht und aufgelötet ist.

5. Funksprechgerät nach einem der Ansprüche 1 bis 4, dadurch **gekennzeichnet,** daß das Brückenelement (11,12) durch korrekte Auslegung des Wellenwiderstandes das erste Element einer Anpaßschaltung bildet.

6. Funksprechgerät nach einem der Ansprüche 1 bis 5, dadurch **gekennzeichnet,** daß das Gehäuse des Funksprechgerätes eine Öffnung aufweist zur Montage des Antennenanschlußelementes (4) von der Geräteaußenseite.

7. Funksprechgerät nach Anspruch 6, dadurch **gekennzeichnet,** daß im Bereich der Aufnahme des Antennenanschlußelementes eine mit einer Abdeckung (5) abschließbare Öffnung im Gerätegehäuse angebracht ist.

## Claims

1. Radio telephone having
- a transmitter/receiver
- an associated unit antenna
- an RF assembly (7)
- a conductor track (8), which is arranged on a printed circuit board (6), to provide an electrically conductive connection between the RF assembly (7) and the associated unit antenna (3),
- with the conductor track having an interruption, which is bounded by two contact connections (10, 9), for optionally plugging on an electrically conductive bridging element (11, 12) for connecting the RF assembly (7) to the associated unit antenna (3), or an antenna connecting element (4) for connecting the RF assembly (7) to an external antenna.

2. Radio telephone according to Claim 1,
**characterized** in that the antenna connecting element (4) is in the form of a plug-in adapter with a coaxial connection.

3. Radio telephone according to Claim 1 or 2,
**characterized** in that the bridging element (12) is in the form of a spring element, and makes contact via springs on conductor tracks (8) on a printed circuit board (6).

4. Radio telephone according to Claim 3,
**characterized** in that the bridging element (11) comprises a clip and is soldered on.

5. Radio telephone according to one of Claims 1 to 4, **characterized** in that, with the characteristic impedance defined correctly, the bridging element (11, 12) forms the first element of a matching circuit.

6. Radio telephone according to one of Claims 1 to 5, **characterized** in that the housing of the radio telephone has an opening for fitting the antenna connecting element (4) from the outside of the unit.

7. Radio telephone according to Claim 6, **characterized** in that the unit housing has an opening, which can be closed by a cover (5) in the region of the holder for the antenna connecting element.

## Revendications

1. Radiotéléphone comprenant
- un émetteur/récepteur,
- une antenne d'appareil associée,
- un module (7) HF
- une piste (8) conductrice disposée sur une plaquette (6) à circuit imprimé pour la liaison conductrice de l'électricité du module (7) HF à l'antenne (3) d'appareil associée,
- la piste conductrice comportant une interruption délimitée par deux bornes (10, 9) de contact, pour enficher au choix un élément (11, 12) de pont conducteur de l'électricité en vue du raccordement du module (7) HF à l'antenne (3) d'appareil associé ou un élément (4) de raccordement d'antenne pour le raccordement du module (7) HF à une antenne extérieure.

2. Radiotéléphone suivant la revendication 1, caractérisé en ce que l'élément (4) de raccordement d'antenne est constitué sous la forme d'un adaptateur à enfichage ayant un raccordement coaxial.

3. Radiotéléphone suivant la revendication 1 ou 2, caractérisé en ce que l'élément (12) à pont est constitué sous la forme d'un élément à ressort et est mis en contact par des ressorts sur les pistes (8) conductrices d'une plaquette (6) à circuit imprimé.

4. Radiotéléphone suivant la revendication 3, caractérisé en ce que l'élément (11) à pont est constitué d'un étrier et est appliqué par brasage.

5. Radiotéléphone suivant l'une des revendications 1 à 4, caractérisé en ce que l'élément (11, 12) à pont forme, en concevant correctement la résistance caractéristique, le premier élément d'un circuit d'adaptation.

6. Radiotéléphone suivant l'une des revendications 1 à 5,
caractérisé en ce que le boîtier du radiotéléphone comporte une ouverture pour le montage de l'élément (4) de raccordement d'antenne par la face extérieure de l'appareil.

7. Radiotéléphone suivant la revendication 6, caractérisé en ce que dans la région de la réception de l'élément de raccordement d'antenne est prévue, dans le boîtier de l'appareil, une ouverture qui peut être fermée par un couvercle (5).
